# EUROPÄISCHE PATENTANMELDUNG

(11) **EP 3 537 354 A1**
(43) Veröffentlichungstag der Anmeldung: **11.09.2019**
(21) Anmeldenummer: 19161578.0
(22) Anmeldetag: 08.03.2019
(51) Int. Cl.: G06Q 10/06, G06Q 50/16

(54) **VERFAHREN ZUR SICHERUNG VON DURCH EINE PERSON DURCHZUFÜHRENDEN FEUERGEFÄHRLICHEN ARBEITEN**

(30) Priorität: 08.03.2018 DE 102018105407
(71) Anmelder: thyssenkrupp Hohenlimburg GmbH, 58119 Hagen (DE); thyssenkrupp AG, 45143 Essen (DE)
(72) Erfinder: BLISCHKE, Markus, 58509 Lüdenscheid (DE); MALMS, Markus, 58675 Hemer (DE)
(74) Vertreter: Richardt Patentanwälte PartG mbB

(57) **Zusammenfassung**

Die Erfindung betrifft ein Verfahren zur Sicherung von durch eine Person durchzuführenden feuergefährlichen Arbeiten in einem feuergefährdeten räumlichen Arbeitsbereich (210-214), wobei dem Arbeitsbereich (210-214) eine eindeutige Bereichskennung zugeordnet ist, wobei die Bereichskennung in dem Arbeitsbereich (210-214) elektronisch lesbar ist, wobei das Verfahren u.A. durch ein Sicherungsgerät (100) umfasst: Empfang einer eindeutigen Personenkennung der Person, Empfang einer Angabe der Art der durchzuführenden feuergefährlichen Arbeiten, Elektronisches Lesen der Bereichskennung, Senden einer Anfrage über Stammdaten zu dem Arbeitsbereich (210-214) an eine Datenbank (122), wobei die Anfrage die Bereichskennung umfasst, als Antwort auf das Senden der Anfrage, Empfang der Stammdaten von der Datenbank (122), wobei die Stammdaten eine eindeutige räumliche Position des Arbeitsbereichs (210-214) umfassen, Abfragen der für die Dauer des Zeitraums zu deaktivierenden Sicherungseinrichtungen (200-208) des Arbeitsbereichs (210-214), Senden eines Deaktivierungsbefehls an eine Brandmeldeanlage (124).

## Beschreibung

Die Erfindung betrifft ein Verfahren zur Sicherung von durch eine Person durchzuführenden feuergefährlichen Arbeiten, ein Computerprogrammprodukt, ein Sicherungsgerät zur Sicherung von durch eine Person durchzuführenden feuergefährlichen Arbeiten und ein System, umfassend das Sicherungsgerät und eine Brandmeldeanlage.

Wenn beispielsweise auf einem Firmengelände eine feuergefährliche Arbeit, wie beispielsweise Schleifen, Trennen, Brennen und Schweißen, ausgeführt werden muss, so muss sichergestellt werden, dass es hierdurch zu keinen Brandereignissen kommen kann. Außerdem muss eine Gefährdung der die feuergefährlichen Arbeiten ausführenden Person ebenfalls ausgeschlossen werden, beispielsweise resultierend aus Gasexplosionen oder Ähnlichem. Letzten Endes geht es um die Vorbeugung von Brandereignissen, deren Risiko einer Entstehung minimiert werden soll. Zwar existieren Brandmeldeanlagen, welche ebenfalls aus dem Bereich des vorbeugenden Brandschutzes stammen. Jedoch empfangen solche Anlagen Ereignisse von Brandmeldern bezüglich bereits entstandener Brände, sodass hierdurch deren Risiko des Entstehens nicht minimiert werden kann.

Die DE 100 24 585 C2 offenbart eine Vorrichtung zur Planung der Betriebszeiten und Servicezeiten einer Anlage, welche Betreiberpflichten unterliegt, die eine Unterbrechung des bestimmungsgemäßen Betriebes einer Anlage in den Servicezeiten erfordern, mit einer Datenverarbeitungsanlage zum Generieren eines Plans der Servicezeiten aus Daten einer ersten und einer zweiten Datenbank, dadurch gekennzeichnet, dass mindestens ein Teil mindestens einer Datenbank betriebsextern bereitgestellt wird, und dass der betriebsexterne Teil der Datenbank Regelungen aus dem Bereich Gesetze, Verordnungen oder Normen enthält, die betriebsextern vorgegeben sind.

Die WO 2016 / 046 328 A1 offenbart ein System zum Überwachen und Verwalten von Vorrichtungswartungs- und / oder Überwachungs- und / oder Inspektions- und / oder Zertifizierungsaktivitäten, umfassend: mindestens ein Etikett, das angepasst ist, um eindeutig einer von mehreren Vorrichtungen angebracht und zugeordnet zu werden, wobei das Etikett einen Identifikationscode umfasst; mindestens eine elektronische Überprüfungsvorrichtung, die eindeutig einem Wartungsbenutzer zugeordnet ist, wobei die Überprüfungsvorrichtung dazu eingerichtet ist, den Identifikationscode zu lesen; einen entfernten Server, der dazu eingerichtet ist, Informationen zu speichern, die sich auf die Geräte und die Verifikationsvorrichtung beziehen; wobei die Verifikationsvorrichtung dazu ausgebildet ist, die Vorrichtungen durch Lesen eines Identifizierungscodes zu identifizieren und dem entfernten Server Informationen zu den identifizierten Vorrichtungen bereitzustellen, wobei die Informationen Daten zum Lokalisieren der Position der Vorrichtungen und der Verifizierungsvorrichtung und mögliche Daten umfassen verbunden mit der Dauer einer Wartungsaktivität, die der Wartungsbenutzer an den Geräten durchführt; der entfernte Server ist so eingerichtet, dass er die empfangenen Informationen mit der Wartungsaktivität in Beziehung setzt.

Die US 2002 / 0 035 495 A1 offenbart ein Bereitstellungsverfahren, umfassend das Bereitstellen einer Bewertung der Wartungs- und technischen Servicebedürfnisse einer Anlage, und das Empfehlen von Diensten für Outsourcing, die aus einem Menü von Diensten ausgewählt werden. Die Services sind modular und können gemischt und an die Bedürfnisse der Anlage angepasst werden. Kategorien von Dienstleistungen beziehen sich auf technische Dienstleistungen, Instandhaltung von Motoren, elektromechanische Dienstleistungen usw.

Der Erfindung liegt die Aufgabe zugrunde, ein Verfahren zur Sicherung von durch eine Person durchzuführenden feuergefährlichen Arbeiten, ein entsprechendes Computerprogrammprodukt, ein zugehöriges Sicherungsgerät und ein entsprechendes System umfassend das Sicherungsgerät und eine Brandmeldeanlage bereitzustellen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Sicherung von durch eine Person durchzuführenden feuergefährlichen Arbeiten in einem feuergefährdeten räumlichen Arbeitsbereich angegeben, wobei dem Arbeitsbereich eine eindeutige Bereichskennung zugeordnet ist, wobei die Bereichskennung in dem Arbeitsbereich elektronisch lesbar ist, wobei das Verfahren durch ein Sicherungsgerät umfasst:
- Empfang einer eindeutigen Personenkennung der Person,
- Empfang einer Angabe der Art der durchzuführenden feuergefährlichen Arbeiten,
- Elektronisches Lesen der Bereichskennung,
- Senden einer Anfrage über Stammdaten zu dem Arbeitsbereich an eine Datenbank, wobei die Anfrage die Bereichskennung umfasst,
- Als Antwort auf das Senden der Anfrage, Empfang der Stammdaten von der Datenbank, wobei die Stammdaten eine eindeutige räumliche Position des Arbeitsbereichs umfassen,
- Empfang eines Zeitraums der Durchführung der feuergefährlichen Arbeiten,
- Abfragen der für die Dauer des Zeitraums zu deaktivierenden Sicherungseinrichtungen des Arbeitsbereichs, wobei die Sicherungseinrichtungen Brandmelder umfassen,
- Senden eines Deaktivierungsbefehls an eine Brandmeldeanlage, wobei der Deaktivierungsbefehl die Brandmeldeanlage steuert, um für den Zeitraum von den zu deaktivierenden Sicherungseinrichtungen gemeldete Ereignisse zur unmittelbaren Beurteilung einer Brandmeldung auszuschließen,
- Senden von Sicherungsdaten an eine Feuerwehrdatenbank der für den Arbeitsbereich zuständigen Feuerwehr, wobei die Sicherungsdaten die Art der durchzuführenden feuergefährlichen Arbeiten, den Zeitraum, die räumliche Position des Arbeitsbereichs und die zu deaktivierenden Sicherungseinrichtungen umfasst,
- Nach dem Senden der Sicherungsdaten, Freigabe der Durchführung der Arbeiten durch die Person für den Zeitraum.

Ausführungsformen der Erfindung könnten den Vorteil haben, dass eine unbeabsichtigte Außerbetriebsetzung von Sicherungseinrichtungen zur Brandvermeidung, wie beispielsweise Brandmelder, zuverlässig vermieden werden kann. Beispielsweise werden die sich im Arbeitsbereich befindlichen und deaktivieren Sicherungseinrichtungen über eine Benutzerschnittstelle am Sicherungsgerät angegeben und es wird daraufhin durch das Sicherungsgerät abgefragt, welche dieser Sicherungseinrichtungen zu deaktivieren sind. Da dies anhand der eindeutigen räumlichen Position des Arbeitsbereichs erfolgt, welcher über die Stammdaten anhand der elektronisch gelesenen Bereichskennung definiert ist, wird sichergestellt, dass nicht aus Versehen Sicherungseinrichtungen zur Deaktivierung angewiesen werden, welche mit dem Arbeitsbereich und damit mit den durchzuführenden feuergefährlichen Arbeiten überhaupt nichts zu tun haben. Es wird also jenes Szenario vermieden, bei welchem aufgrund von Unachtsamkeit ein z.B. sich außerhalb des Arbeitsbereichs befindlicher Brandmelder deaktiviert wird und daraufhin am Ort des deaktivierten Brandmelders zufällig ein Feuer entsteht. Eine Brandmeldeanlage würde ein so gemeldetes Feuerereignis ignorieren, da sie diese entweder aufgrund vollständiger Deaktivierung der dortigen Sicherungseinrichtung überhaupt nicht detektieren kann.

Es sei angemerkt, dass neben Brandmeldern die Sicherungseinrichtungen auch jegliche anderen technischen Einrichtungen umfassen können, mittels welcher ein Ereignis detektiert werden kann, welches aus einem Brand resultiert oder aber welches zu einem Brand führen kann. Dazu gehören Rauchdetektoren, CO Detektoren, Detektoren für brennbare Gase. Beispielsweise umfassen Sicherungseinrichtungen auch Sprinklerköpfe von Sprinkleranlagen, welche mit einer Glasampulle verschlossen sind, wobei bei Hitzeentwicklung die Glasampulle schmilzt und daraufhin Wasser aus dem Sprinklerrohrnetz austreten kann. Dies führt zu einem Druckabfall, welcher erkannt werden kann und somit einem Brandfall zugeordnet werden kann. Auch dies kann so eingerichtet werden, dass hierdurch die örtliche Position des den Druckabfall verursachenden Sprinklerkopfes einfach bestimmt werden kann.

Dadurch, dass nun zusätzlich die Sicherungsdaten an eine Feuerwehrdatenbank der für den Arbeitsbereich zuständigen Feuerwehr übermittelt werden, könnte sichergestellt werden, dass in medienbruchfreier Form und damit in fehlerfreier Form sichergestellt wird, dass die für den Arbeitsbereich zuständigen Brandbekämpfungseinheiten zu jedem Zeitpunkt mit den erforderlichen Daten versorgt sind, welche zum einen über die Notwendigkeit eines Einsatzes entscheiden können und zum anderen, welche die Feuerwehr dann auch in die Lage versetzen, entsprechende Brandbekämpfungsmaßnahmen zielgerichtet einzusetzen.

Nach einer Ausführungsform der Erfindung umfasst das Verfahren ferner die Durchführung der Arbeiten durch die Person in dem Zeitraum.

Nach einer Ausführungsform der Erfindung umfassen die Stammdaten ferner weitere Angaben bezüglich während dem Zeitraum in dem Arbeitsbereich befindlicher Gefahrstoffe und/oder Maschinen, welche bei der Durchführung der feuergefährlichen Arbeiten die Person gefährden könnten. Zum Beispiel werden diese weiteren Angaben durch das Sicherungsgerät der Person angezeigt.

Dies könnte den Vorteil haben, dass die Person zielgerichteter in der Lage ist, darüber zu entscheiden, welche der Sicherungseinrichtungen zu deaktivieren sind und welche nicht. Umfassen beispielsweise die Sicherungseinrichtungen Gasmelder, also Melder, welche den Austritt von Gas melden. So könnte die Person bei Arbeiten in einem Arbeitsbereich, in welchem brennbares Gas führende Leitungen verlegt sind, entscheiden, dass ein zugehöriger Gasmelder nicht deaktiviert wird, da eine deaktivierte Detektion von austretendem Gas bei der Durchführung feuergefährlicher Arbeiten, wie beispielsweise Schweißarbeiten, zu einer Explosion führen könnten. Führt der Arbeiter hingegen Schweißarbeiten beispielsweise unter Einsatz von Ethylen-Schweißgas in der Nähe solch entsprechender Gasdetektoren durch und weiß er, dass entsprechende in der Nähe des Arbeitsbereichs verlaufende Gasleitungen zurzeit frei von Gas sind, so wird er sich dafür entscheiden, einen solchen Gasmelder zu deaktivieren, da es ansonsten aufgrund des verwendeten Ethylengases zu einem unerwünschten Fehlalarm kommen könnte.

Nach einer Ausführungsform der Erfindung umfasst das Verfahren durch das Sicherungsgerät ferner ein Nacheinander-Abfragen von durch die Person vor Durchführung der Arbeiten auszuführenden verschiedenen Sicherungsmaßnahmen, wobei die Sicherungsmaßnahmen die Gefahr einer durch die Arbeiten ausgelösten Brandentwicklung oder Personengefährdung minimieren können. Grundsätzlich ist dies unabhängig davon, ob nun die Stammdaten die weiteren Angaben enthalten bezüglich der Gefahrstoffe und/oder Maschinen. Allerdings könnte es von Vorteil sein, wenn die Person jene weiteren Angaben am Sicherungsgerät angezeigt bekommt, um daraufhin zu entscheiden, welche der Sicherungsmaßnahmen als auszuführend gekennzeichnet werden sollen.

Verläuft beispielsweise eine brennbares Gas führende Rohrleitung in der Nähe jener Stelle, an der die feuergefährlichen Arbeiten auszuführen sind, so könnte die Person über die weiteren Angaben hierauf hingewiesen werden und ferner könnte die Person als Sicherungsmaßnahme abgefragt werden, ob eine Überprüfung der Rohrleitungen und zugehöriger Apparate auf Dichtheit vor Durchführung der feuergefährlichen Arbeit auszuführen ist. Eine weitere Art der Sicherungsmaßnahme ist beispielsweise die Abdeckung von Rohrleitungen oder Apparaten oder von Behältnissen, welche beispielsweise bei Funkenflug ein Feuer verursachen könnten.

Ein Beispiel für Maschinen, welche bei der Durchführung der feuergefährlichen Arbeiten die Person gefährden könnten, sind stark span- oder stauberzeugende Maschinen, da bei In-Kontakt-treten von Spänen, insbesondere Metallspänen oder auch allgemein von Staub mit heißen Oberflächen oder Funken, die Gefahr eines Brandes oder gar einer Explosion signifikant erhöht ist.

Ein weiteres Beispiel von verschiedenen Sicherungsmaßnahmen ist die Bereitstellung eines Feuerlöschers im Arbeitsbereich oder gar das Anschließen und Auslegen eines Feuerwehrschlauchs im Arbeitsbereich. Dies macht insbesondere dann Sinn, wenn am Arbeitsbereich befindliche Brandmelder deaktiviert sind und somit die Einsatzzeit bis zur Ankunft einer Brandbekämpfungseinheit im Brandfall hierdurch deutlich erhöht ist, da zunächst ein entsprechendes Brandereignis als solches aufgrund der deaktivierten Brandmelder nicht unmittelbar registriert werden kann.

Nach einer Ausführungsform der Erfindung erfolgt die Freigabe nur dann, wenn alle Sicherungsmaßnahmen vollständig abgefragt worden sind. Hierdurch könnte vermieden werden, dass durch Unachtsamkeit der Person wesentliche Sicherungsmaßnahmen übersehen werden und sich die Person damit einer Gefahr aussetzt, ja sogar allgemein die Gefahr der Entstehung eines Brandes aufgrund der feuergefährlichen Arbeiten riskiert.

Nach einer Ausführungsform der Erfindung umfasst das Verfahren ferner eine Analyse der Art der durchzuführenden feuergefährlichen Arbeiten und/oder von während dem Zeitraum in dem Arbeitsbereich befindlichen Gefahrstoffen und/oder Maschinen, wobei das Verfahren ferner ein automatisches Auswählen der abzufragenden Sicherungsmaßnahmen aus einem Sicherungsmaßnahmenkatalog basierend auf der Analyse umfasst. Dies könnte den Vorteil haben, dass der Person nicht ein umfangreicher Sicherungsmaßnahmenkatalog in seiner Gesamtheit vorgelegt werden muss, aus welcher sich dann die Person mühevoll geeignete Sicherungsmaßnahmen heraussuchen muss, sondern es erfolgt eine Vorabauswahl und damit Einschränkung der abzufragenden Sicherungsmaßnahmen, sodass die Person dann in der Lage ist, aus einem im Vergleich zum gesamten Sicherungsmaßnahmenkatalog viel kleineren Satz von Sicherungsmaßnahmen die hier geeignetsten Sicherungsmaßnahmen auszuwählen. Ein kleinerer Satz von Sicherungsmaßnahmen im Vergleich aller im Sicherungsmaßnahmenkatalog enthaltenen Sicherungsmaßnahmen würde damit sicherstellen, dass die Wahrscheinlichkeit einer Fehleingabe bei der Abfragung der auszuführenden Sicherungsmaßnahmen durch die Person minimiert wird. Denn physiologisch wird es so sein, dass bei gegebener Konzentrationsfähigkeit bei einem kleinen Satz von abzuarbeitenden Abfragen von Sicherungsmaßnahmen die Fehlerwahrscheinlichkeit bezüglich der Auswahl relevanter Sicherungsmaßnahmen signifikant niedriger ist im Vergleich zu einem großen Satz von abgefragten Sicherungsmaßnahmen.

Beispielsweise könnte diese automatische Auswahl der abzufragenden Sicherungsmaßnahmen durch ein Bewertungsmodul erfolgen, wobei dieses Bewertungsmodul entweder im Sicherungsgerät selbst integriert ist oder sich dieses außerhalb des Sicherungsgerätes befindet.

Im letzteren Fall verfügt das Sicherungsgerät beispielsweise über eine Luftschnittstelle (WLAN, Funk, Bluetooth, Mobilfunk), über welche an dieses externe Bewertungsmodul die Art der durchzuführenden feuergefährlichen Arbeiten und/oder die während dem Zeitraum in dem Arbeitsbereich befindlichen Gefahrstoffe und/oder Maschinen übermittelt werden, wobei als Antwort auf das Senden die abzufragenden Sicherungsmaßnahmen von dem Bewertungsmodul empfangen werden.

Nach einer Ausführungsform der Erfindung umfasst das Verfahren ferner
- Empfang von der Person einer Eingabe einer Bestätigung eines Satzes der abgefragten Sicherungsmaßnahmen, wobei die Bestätigung angibt, dass der Satz von Sicherungsmaßnahmen ausgeführt werden soll,
- Prüfung, ob die bestätigten Sicherungsmaßnahmen bezüglich der weiteren Angaben bezüglich im dem Arbeitsbereich befindlichen Gefahrstoffe und/oder Maschinen ausreichend sind, um die Gefahr einer durch die Arbeiten ausgelösten Brandentwicklung oder die Personengefährdung zu minimieren, wobei die Freigabe nur dann erfolgt, wenn die Prüfung ergibt, dass die bestätigten Sicherungsmaßnahmen ausreichend sind.

Dies könnte den Vorteil haben, dass die Gefahr, welche aus der Ausführung der feuergefährlichen Arbeiten resultiert, weiter minimiert werden kann, da einerseits die Person die ihr zur Verfügung stehenden Sicherungsmaßnahmen frei kombinieren kann und andererseits jedoch elektronisch geprüft wird, ob die Kombination ausreichend ist oder ob die Person nicht etwa eine wesentliche Sicherungsmaßnahme übersehen hat. Diese Prüfung kann hierbei ebenfalls durch das Bewertungsmodul oder aber durch das Sicherungsgerät selbst erfolgen. So könnte eine Kombination des Sicherungsmaßnahmen "Bereitstellen Feuerlöscher" und "Feuerwehrschlauch verlegen und anschließen" als nicht ausreichend bewertet werden, wenn hingegen "Rohrleitungen auf Dichtheit prüfen" nicht ausgewählt wurde und in der Nähe von brennbarem Gas führenden Leitungen gearbeitet wird. Zulässigkeit könnte jedoch gegeben sein bei der Kombination "Bereitstellen Feuerlöscher" und "Rohrleitungen auf Dichtheit prüfen". Zulässigkeit könnte auch gegeben sein bei "Feuerwehrschlauch verlegen und anschließen" und "Rohrleitungen auf Dichtheit prüfen".

Nach einer Ausführungsform der Erfindung umfasst das Verfahren ferner das Senden eines Steuerbefehls an jene technischen Einrichtungen, von welchen während der Durchführung der Arbeiten eine Gefahr einer durch die Arbeiten ausgelösten Brandentwicklung oder eine Personengefährdung ausgeht, wobei der Steuerbefehl die technischen Einrichtungen so steuert, dass während des Zeitraums die Gefahr einer durch die Arbeiten ausgelösten Brandentwicklung oder die Personengefährdung minimiert wird.

In dem obig genannten Beispiel der staubentwickelnden Maschinen könnte somit sichergestellt werden, dass unabhängig von einer beabsichtigten manuellen Deaktivierung der Maschine während des Zeitraums in vollautomatischer Weise die Maschine durch den Steuerbefehl außer Betrieb gesetzt wird, sodass hierdurch menschliches Versagen ausgeschlossen wird und damit einer möglichen Brandentwicklung zielgerichtet vorgebeugt wird. Ein weiteres Beispiel ist die obig beschriebene, brennbares Gas führende Gasleitung, welche ebenfalls allgemein als "technisches Einrichtung" gesehen werden kann. Wird nun in unmittelbarer Nähe zu dieser Gasleitung oder sogar an der Gasleitung selbst eine feuergefährliche Arbeit durchgeführt, könnte durch das Schließen entsprechender Ventile der Gasleitung aufgrund des Steuerbefehls verhindert werden, dass zum Zeitpunkt der Durchführung der feuergefährlichen Arbeiten eine Explosionsgefahr aufgrund eines geführten brennbaren Gases besteht.

Nach einer Ausführungsform der Erfindung erfolgt die Freigabe nur, wenn die technischen Einrichtungen dem Empfang und die ordnungsgemäße Verarbeitung des Steuerbefehls quittiert haben. Hierbei könnte es sich um eine weitere Stufe der Sicherheit handeln, da nicht automatisch davon ausgegangen wird, dass das Senden des Steuerbefehls an sich schon die technischen Einrichtungen deaktiviert. Vielmehr muss die technische Einrichtung selbst den ordnungsgemäßen Empfang und die ordnungsgemäße Verarbeitung des Steuerbefehls quittiert haben, bevor die Freigabe zur Durchführung der feuergefährlichen Arbeiten erfolgt.

Nach einer Ausführungsform der Erfindung umfasst das Verfahren ferner innerhalb des Zeitraums durch die Brandmeldeanlage den Empfang eines ersten Ereignisses bezüglich eines möglichen Brandes von einem Brandmelder aus einem an den Arbeitsbereich angrenzenden Bereich, in welchem etwaiger Rauch von dem Arbeitsbereich überströmen kann, wobei die Brandmeldeanlage aufgrund des Ereignisses
- sofort einen Feueralarm mit niedriger Priorität im Vergleich zu einem normalen Feueralarm auslöst und/oder
- einen Feueralarm mit niedriger Priorität im Vergleich zu einem normalen Feueralarm auslöst, wenn von einem Brandmelder aus dem Arbeitsbereich zeitlich zuvor innerhalb des Zeitraumes ein zweites Ereignis bezüglich eines möglichen Brandes empfangen wurde und/oder
- einen Feueralarm mit der normalen Priorität auslöst, wenn von einem Brandmelder aus dem Arbeitsbereich zeitlich zuvor innerhalb des Zeitraums kein zweites Ereignis bezüglich eines möglichen Brandes empfangen wurde.

Dies könnte den Vorteil haben, dass trotz der Deaktivierung etwaiger Brandmelder in dem Arbeitsbereich noch in sicherer Weise etwaige Brandereignisse detektiert werden können bzw. auf etwaige Brandereignisse in geeigneter Weise reagiert werden kann. Das "normale" Szenario wäre, dass jegliches Ereignis, welches von einem aktiven Brandmelder gemeldet wird, als Feueralarm interpretiert wird. Da nun jedoch von dem Arbeitsbereich, in welchem die feuergefährlichen Arbeiten durchgeführt werden, Rauch in den an den Arbeitsbereich angrenzenden Bereich überströmen kann, ist die Wahrscheinlichkeit groß, dass ein entsprechendes "Brandereignis", welches von einem solchen Brandmelder aus einem an den Arbeitsbereich angrenzenden Bereich gemeldet wird, lediglich daraus resultiert, dass aus dem Arbeitsbereich aus den feuergefährlichen Arbeiten resultierender Rauch in den angrenzenden Bereich hinübergezogen ist. Es wird also davon ausgegangen, dass es sich hierbei nicht etwa um einen Brand handelt, sondern dass eine entsprechende Rauchentwicklung lediglich direkt auf die feuergefährlichen Arbeiten direkt zurückzuführen ist. Denn gerade Schleifen, Trennen, Brennen und Schweißen verursachen für sich bereits aufgrund dieser Arbeiten häufig Rauch, der jedoch nichts mit einem Brand im herkömmlichen Sinn zu tun hat.

Durch den Feueralarm mit niedriger Priorität wird einerseits der Meldung eines etwaigen Brandes Rechnung getragen, sodass es nicht vollständig ignoriert wird. Andererseits wird jedoch ein "Großeinsatz" der Feuerwehr vorgebeugt, welcher mit hoher Wahrscheinlichkeit unnötig ist.

Dies kann dadurch verfeinert werden, dass als weiteres Kriterium für die Auslösung des Feueralarms mit niedriger Priorität vorausgesetzt wird, dass bereits Rauch innerhalb des Zeitraums, in welchem die feuergefährlichen Arbeiten durchgeführt werden, durch einen gegebenenfalls dort deaktivierten Brandmelder detektiert wurde. Deaktiviert bedeutet in diesem Zusammenhang lediglich, dass von diesem Brandmelder gemeldete Ereignisse nicht unmittelbar zu einem Alarm führen, sondern zunächst lediglich den feuergefährlichen Arbeiten zugeordnet werden. Der Brandmelder an sich ist selbst nach wie vor elektronisch aktiv und in der Lage, entsprechende Ereignisse zu melden.

Durch die Korrelation des Meldeereignisses des im Arbeitsbereich befindlichen Brandmelders mit dem Meldeereignis des Brandmelders, welcher sich in dem an den Arbeitsbereich angrenzenden Bereich befindet, wird die Wahrscheinlichkeit der Richtigkeit der Interpretation der Meldung des ersten Ereignisses signifikant erhöht, da dies automatisch darauf zurückgeführt wird, dass zunächst Rauch in dem Bereich entstanden ist, in welchem die feuergefährlichen Arbeiten ausgeführt wurden und dieser Rauch daraufhin hinübergezogen ist in den angrenzenden Bereich.

Das Gegenteil hierzu, nämlich dass ausschließlich Rauch in dem angrenzenden Bereich detektiert wurde und in dem eigentlichen Arbeitsbereich keine Rauchentwicklung festgestellt wurde, führt automatisch dazu, dass ein Alarm mit normaler Priorität ausgegeben wird, da damit die Rauchentwicklung in dem angrenzenden Bereich höchstwahrscheinlich nicht auf die feuergefährlichen Arbeiten selbst (den durch die feuergefährlichen Arbeiten selbst entstandenen Rauch) zurückzuführen ist.

Nach einer Ausführungsform der Erfindung wird im Falle des Feueralarms mit der niedrigen Priorität, bezüglich welchem von einem Brandmelder aus dem Arbeitsbereich zeitlich zuvor innerhalb des Zeitraums das zweite Ereignis bezüglich eines möglichen Brandes empfangen wurde, auf einem Einsatzleitrechner der für den Arbeitsbereich zuständigen Feuerwehr neben der Information bezüglich des ersten Ereignisses auch eine Information bezüglich des zweiten Ereignisses mit dem Hinweis einer möglichen Korrelation zwischen diesen beiden Ereignissen und den Sicherungsdaten selbst ausgegeben.

Dies könnte den Vorteil haben, dass einerseits die Feuerwehr über den Alarm überhaupt informiert ist, um nun entsprechende Entscheidungen zu treffen, wie mit diesem Alarm umgegangen werden soll. Da nun noch zusätzlich die mögliche Korrelation zwischen den beiden Ereignissen und die Sicherungsdaten ausgegeben werden, verfügt der Einsatzleiter der Feuerwehr über ein vollständiges Bild, inwieweit dieser Alarm mit niedriger Priorität zu einem vollständigen Feuerwehreinsatz führen soll oder ob es genügt, hier zur Kontrolle eine kleinere Einsatztruppe oder gar eine einzelne Person in den betreffenden angrenzenden Bereich zu schicken. Geben beispielsweise die Sicherungsdaten an, dass die Art der durchzuführenden feuergefährlichen Arbeiten lediglich das Herstellen einer Lötverbindung an einem einzelnen kleinen Kabel betrifft, so ist davon auszugehen, dass eine Lötvorgang selbst resultierende Rauchentwicklung so minimal sein wird, dass ein im Arbeitsbereich befindlicher Rauchmelder diesen hierdurch entstehenden Rauch überhaupt nicht detektieren wird. Damit wäre die Einsatzleitung in der Lage schlusszufolgern, dass die Rauchentwicklung in dem angrenzenden Bereich mit aller Wahrscheinlichkeit nach nicht auf die Lötarbeiten zurückzuführen ist, sodass daraufhin ein normaler Feuerwehreinsatz angeordnet werden wird.

Wenn nun noch die Sicherungsdaten zusätzlich Angaben zur Person selbst, welche die feuergefährlichen Arbeiten durchführt, enthält, so könnte dies zur Durchführung entsprechender Rettungsmaßnahmen der Person verwendet werden: Eine der Person zugehörige Telefonnummer, welche in den Sicherungsdaten enthalten ist, könnte dazu verwendet werden, die Person unmittelbar anzurufen und damit abzufragen, ob eine Brandentwicklung stattgefunden hat oder nicht. In den Sicherungsdaten hinterlegte Gesundheitsdaten zur Person, wie beispielsweise eine Diabetes-Vorerkrankung oder allgemein Vorerkrankungen, könnten dazu verwendet werden, ein entsprechendes Rettungsteam im Voraus zu instruieren, bei dem Rettungseinsatz diese Vorerkrankung zu berücksichtigen und damit zu einer verbesserten Personenrettung beizutragen.

In einem weiteren Aspekt betrifft die Erfindung ein Computerprogrammprodukt mit von einem Prozessor oder mehreren Prozessoren ausführbaren Instruktionen zur Durchführung des Verfahrens, wie es obig beschrieben wurde. In einem weiteren Aspekt betrifft die Erfindung ein Sicherungsgerät zur Sicherung von durch eine Person durchzuführenden feuergefährlichen Arbeiten in einem feuergefährdeten räumlichen Arbeitsbereich, wobei dem Arbeitsbereich eine eindeutige Bereichskennung zugeordnet ist, wobei die Bereichskennung in dem Arbeitsbereich elektronisch lesbar ist, wobei das Sicherungsgerät einen Prozessor und einen Speicher aufweist, wobei der Speicher durch den Prozessor ausführbare Anweisungen enthält, wobei die Ausführung der Anweisungen durch den Prozessor das Sicherungsgerät zum:
- Empfang einer eindeutigen Personenkennung der Person,
- Empfang einer Angabe der Art der durchzuführenden feuergefährlichen Arbeiten,
- Elektronisches Lesen der Bereichskennung,
- Senden einer Anfrage über Stammdaten zu dem Arbeitsbereich an eine Datenbank, wobei die Anfrage die Bereichskennung umfasst,
- Als Antwort auf das Senden der Anfrage, Empfang der Stammdaten von der Datenbank, wobei die Stammdaten eine eindeutige räumliche Position des Arbeitsbereichs umfassen,
- Empfang eines Zeitraums der Durchführung der feuergefährlichen Arbeiten,
- Abfragen der für die Dauer des Zeitraums zu deaktivierenden Sicherungseinrichtungen des Arbeitsbereichs, wobei die Sicherungseinrichtungen Brandmelder umfassen,
- Senden eines Deaktivierungsbefehls an eine Brandmeldeanlage, wobei der Deaktivierungsbefehl die Brandmeldeanlage steuert, um für den Zeitraum von den zu deaktivierenden Sicherungseinrichtungen gemeldete Ereignisse zur Beurteilung einer Brandmeldung auszuschließen,
- Senden von Sicherungsdaten an eine Feuerwehrdatenbank der für den Arbeitsbereich zuständigen Feuerwehr, wobei die Sicherungsdaten die Art der durchzuführenden feuergefährlichen Arbeiten, den Zeitraum, die räumliche Position des Arbeitsbereichs und die zu deaktivierenden Sicherungseinrichtungen umfasst,
- Nach dem Senden der Sicherungsdaten, Freigabe der Durchführung der Arbeiten durch die Person für den Zeitraum.

In einem weiteren Aspekt betrifft die Erfindung ein System, umfassend das beschriebene Sicherungsgerät sowie eine Brandmeldeanlage und optional einen Einsatzleitrechner, wie er ebenfalls obig beschrieben wurde.

Es sei angemerkt, dass die obig beschriebenen Ausführungsformen und Varianten der Erfindung in beliebiger Weise miteinander kombiniert werden können, solange sich die Kombinationen nicht gegenseitig ausschließen.

Im Folgenden werden bevorzugt Ausführungsformen der Erfindung anhand der Zeichnungen näher erläutert. Es zeigen:
- Figur 1: ein Blockdiagramm eines Systems umfassend ein Sicherungsgerät, eine Brandmeldeanlage, eine Feuerwehrdatenbank und einen Einsatzleitrechner,
- Figur 2: eine schematische Ansicht einer Übersicht verschiedener mit Brandmeldern ausgestatteter Räume,
- Figuren 3a und 3b: Beispiele von Inhalten, welche am Sicherungsgerät angezeigt werden können,
- Figur 4: ein Flussdiagramm zur Sicherung von durch eine Person durchzuführenden feuergefährlichen Arbeiten in einem feuergefährdeten räumlichen Arbeitsbereich und
- Figur 5: ein Flussdiagramm eines Verfahrens zur Beurteilung eines Feueralarms, welcher im Rahmen der Sicherung der durchzuführenden feuergefährlichen Arbeiten ausgelöst wurde.

Im Folgenden werden einander ähnliche Elemente mit den gleichen Bezugszeichen gekennzeichnet.

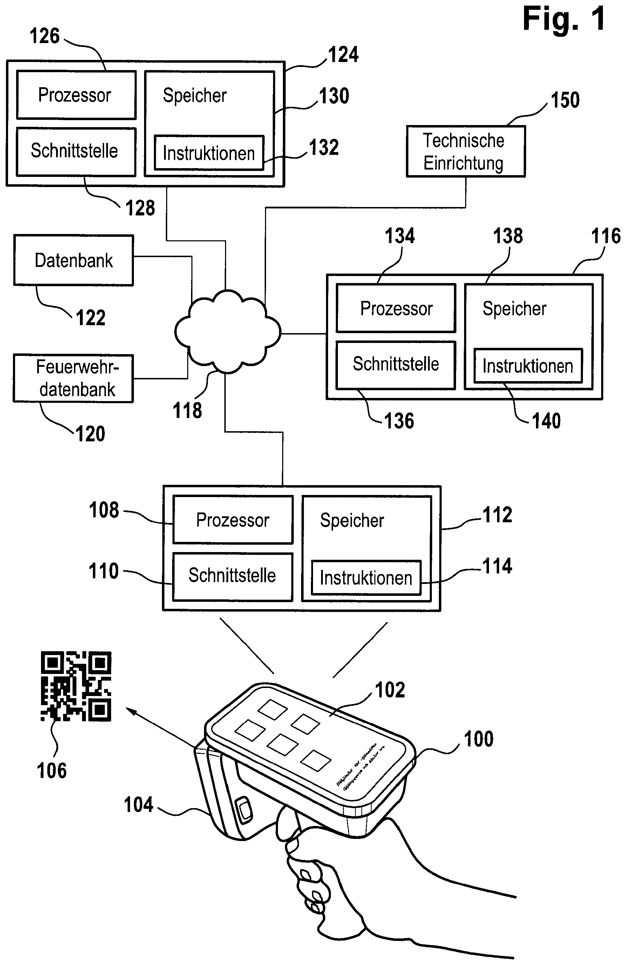

Die Figur 1 zeigt zunächst ein Sicherungsgerät, wobei in dem Beispiel der Figur 1 das Sicherungsgerät die Form eines Handscanners 100 hat. Der Handscanner 100 verfügt über ein Lesegerät 104, mittels welchem optisch ein QR-Code 106 lesbar ist. Der QR-Code codiert dabei eine räumliche Position eines Arbeitsbereichs und befindet sich beispielsweise am Eingang zu einem bestimmten eindeutig abgrenzbaren Arbeitsbereich oder aber an einer Maschine, wenn diese selbst als Arbeitsbereich deklariert wird. Mittels des Handscanners 100 kann der QR-Code 106 abgescannt werden. Das Sicherungsgerät 100 verfügt ferner über eine Anzeige 102, beispielsweise ein Display, über welches die das Sicherungsgerät bedienende Person Informationen erhalten und eingeben kann.

Eine Bereichskennung ist also in dem QR-Code 106 codiert, wobei der Scanner 100 nach Lesen der Bereichskennung diese an eine Datenbank 122 über ein Netzwerk 118 wie beispielsweise ein Intranet oder das Internet senden kann. Als Antwort hierauf erhält der Scanner 100 eine Angabe von Stammdaten, wobei die Stammdaten eine eindeutige räumliche Position des Arbeitsbereichs umfassen, welchem der QR-Code 106 und damit die Bereichskennung zugeordnet ist.

Über das Display 102 kann nun der Handscanner der Person verschiedene Sicherungseinrichtungen wie Brandmelder auflisten, welche die Person vor Durchführung der feuergefährlichen Arbeiten deaktivieren möchte. Nach Erhalt einer entsprechenden Eingabe am Display 102 wird ein entsprechender Deaktivierungsbefehl des ausgewählten zu deaktivierenden Brandmelders vom Scanner 100 an eine Brandmeldeanlage 124 übermittelt, wobei der Deaktivierungsbefehl die Brandmeldeanlage 124 so steuert, um für den Zeitraum, in welchem die feuergefährlichen Arbeiten durchgeführt werden sollen, eventuell von dem Brandmelder gemeldete Meldeereignisse zur unmittelbaren Beurteilung einer Brandmeldung auszuschließen. "Unmittelbar" bedeutet dabei, dass die Brandmeldeanlage sofort einen Feueralarm mit normaler Priorität auslöst, wenn an dem deaktivierten Brandmelder ein Brandereignis erzeugt wird.

Vorzugsweise wird die Liste der möglichen deaktivierbaren Sicherungseinrichtungen am Display 102 dergestalt eingeschränkt angezeigt, dass nur jene Sicherungseinrichtungen aufgelistet werden, welche dem feuergefährdeten räumlichen Arbeitsbereich zugeordnet sind. Beispielsweise kann in den Stammdaten, welche von der Datenbank 122 empfangen werden, auch eine Liste jener Sicherungseinrichtungen enthalten sein, welche der Bereichskennung zugeordnet sind.

Wie bereits obig beschrieben, könnte hierdurch vermieden werden, dass eine Person unabsichtlich eine Sicherungseinrichtung deaktiviert, welche mit den durchzuführenden feuergefährlichen Arbeiten in dem feuergefährdeten räumlichen Arbeitsbereich in keinem Zusammenhang steht.

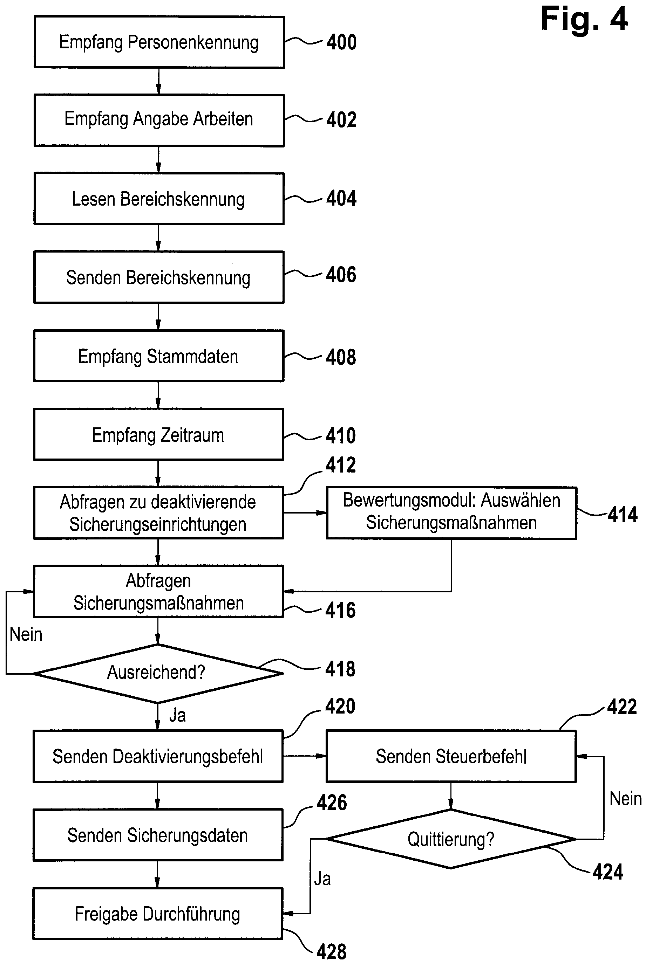

Zum besseren Verständnis sei im Folgenden die Figur 1 zusammen mit dem Flussdiagramm der Figur 4 erläutert.

Wie bereits erwähnt, beginnt das Verfahren im Schritt 400 mit dem Empfang einer Personenkennung, wobei dieses ebenfalls über das Display, beispielsweise ein Touchscreen oder eine am Display angeordnete Tastatur oder eine im Scanner integrierte Lesevorrichtung zum Lesen einer Personenkennung der Person, realisiert werden kann. Beispielsweise kann der Handscanner 100 über einen RFID-Scanner verfügen, wobei die Lesekennung über einen RFID-Tag an das Lesegerät 100 übertragen werden kann und der RFID-Tag in Besitz der Person ist, welche feuergefährlichen Arbeiten durchzuführen hat.

Im Schritt 402 erfolgt daraufhin zusätzlich ein Empfang einer Angabe der Art der durchzuführenden feuergefährlichen Arbeiten, beispielsweise eine Angabe darüber, ob ein Schleifen, Trennen, Brennen oder Schweißen oder Ähnliches durchzuführen ist. Dies kann ergänzt werden mit Angaben, welche Tätigkeit konkret auszuführen ist (zum Beispiel Schweißen Rohr 157 an Abzweigung T3).

Im Schritt 404 erfolgt mittels des Handscanners 100 und dessen Lesegerät 104 ein optisches Lesen der Bereichskennung 106. Möglich ist jedoch auch ein allgemeinelektronisches Lesen, auch ein Lesen unter Verwendung von RFID-Technologien oder allgemein einer drahtlosen Technologie, wie Bluetooth- oder WLAN-Technologie. Nachdem nun also der QR-Code 106 im Beispiel der Figur 1 durch das Lesegerät 104 optisch gelesen wurde, wird daraufhin die ausgelesene Bereichskennung im Schritt 406 an die Datenbank 122 übermittelt. Die Datenbank 122 verfügt über eine Zuordnung von Bereichskennungen zu eindeutigen räumlichen Positionen von Arbeitsbereichen. Die Datenbank kann darüber hinausgehend noch über weitere Informationen verfügen, wie beispielsweise in dem Arbeitsbereich befindliche Gefahrstoffe oder Maschinen, welche die Person bei der Durchführung der feuergefährlichen Arbeiten gefährden könnten. Zumindest die eindeutige räumliche Position des Arbeitsbereichs, optional auch die anderen, in der Datenbank enthaltenen Angaben bezüglich der Gefahrstoffe usw., können daraufhin im Schritt 408 von der Datenbank 122 an den Scanner 100 zurückübertragen werden.

Im Schritt 410 erfolgt am Scanner eine weitere Eingabe bezüglich jenes Zeitraums, innerhalb welchem die feuergefährlichen Arbeiten geplant sind durchgeführt zu werden.

Im Schritt 412 erfolgt ein Abfragen der zu deaktivierenden Sicherungseinrichtungen durch den Scanner 100, wobei nachdem die Person die zu deaktivierenden Sicherungseinrichtungen in den Scanner eingegeben hat, im Schritt 420 ein Deaktivierungsbefehl an eine Brandmeldeanlage über das Netzwerk 118 gesendet wird, wobei dieser Deaktivierungsbefehl die Brandmeldeanlage 124 steuert, für den Zeitraum, welcher im Schritt 410 empfangen wurde, von den zu deaktivierenden Sicherungseinrichtungen gemeldete Ereignisse zur unmittelbaren Beurteilung einer Brandmeldung auszuschließen.

Im Schritt 426 erfolgt anschließend ein Senden der Sicherungsdaten vom Scanner 100 an eine Feuerwehrdatenbank 120 über das Netzwerk 118, wobei die Sicherungsdaten zumindest die Art der durchzuführenden feuergefährlichen Arbeiten, den Zeitraum, die räumliche Position des Arbeitsbereichs und die zu deaktivierenden Sicherungseinrichtungen umfasst.

Das Verfahren endet schließlich im Schritt 428 mit der Freigabe der Durchführung durch den Scanner 100.

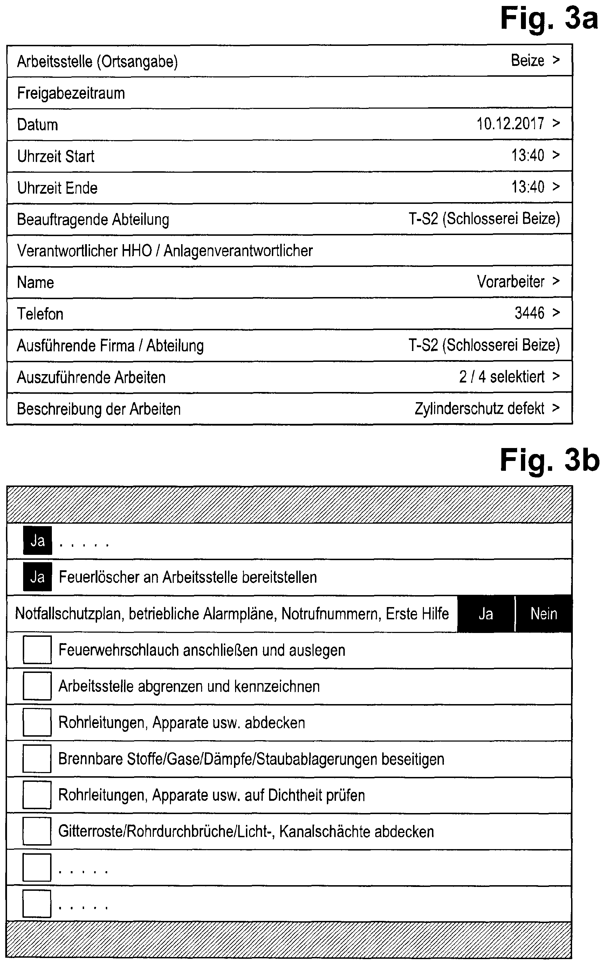

Die Figur 3a zeigt exemplarisch jene Daten, welche dem Scanner 100 im Rahmen der Sicherungsdaten zur Verfügung stehen. Hier ist zunächst eine genaue Ortsangabe, im vorliegenden Fall eine Beize, angegeben, wobei diese Ortsangabe soweit präzisiert sein sollte, dass eine eindeutige Zuordnung der Ortsangabe zu dem Arbeitsbereich möglich ist, in welchem die feuergefährlichen Arbeiten durchgeführt werden sollen. Ferner angegeben ist der Zeitraum, in welchem die Arbeiten durchgeführt werden sollen, sowie eine Angabe der Person oder der Abteilung oder der Firma, welche die Arbeiten durchführt. Nicht gezeigt ist hier die eindeutige Personenkennung der Person, welche die Arbeiten durchführt. Dies ist jedoch, wie bereits oben erwähnt, ebenfalls Gegenstand der Informationen, welche dem Scanner 100 zur Verfügung stehen und welche vorzugsweise ebenfalls in den Sicherungsdaten an die Feuerwehrdatenbank übermittelt werden.

Die zusätzliche Angabe der Verantwortlichen für die Anlage, welche sich im Arbeitsbereich befindet, im welchen die feuergefährlichen Arbeiten durchgeführt werden sollen (zum Beispiel Raum 210) helfen, im Alarmfall in einfacher Weise Verantwortlichkeiten abzufragen, um dann beispielsweise über die angegebene Telefonnummer die verantwortliche Person zu kontaktieren und abzufragen, ob nun ein Fehlalarm oder ein tatsächlicher Brandfall gegeben ist.

Figur 3a zeigt ferner die Angabe der Art der durchzuführenden feuergefährlichen Arbeiten "auszuführende Arbeiten, Beschreibung der Arbeiten".

Bisher nicht diskutiert wurden die Schritte 414 bis 418 sowie 422 bis 426, welche optional sind.

Wie in der Figur 1 ersichtlich ist, umfasst der Scanner 100 einen Prozessor 108 und eine Speicher 112 mit Instruktionen 114. Die Instruktionen 114 können bei Ausführung durch den Prozessor 108 zur Steuerung des Scanners 100 zur Durchführung der beschriebenen Verfahrensschritte verwendet werden. Über die Schnittstelle 110 des Scanners ist die Kommunikation über das Netzwerk 118 möglich.

Selbiges gilt in analoger Weise bezüglich der Brandmeldeanlage, welche ebenfalls über einen Prozessor 126 und einen Speicher 130 mit Instruktionen 132 verfügt. Die Ausführung der Instruktionen 132 durch den Prozessor 136 steuert die Brandmeldeanlage zur Durchführung jeglicher Verfahrensschritte, welche im Rahmen der vorliegenden Beschreibung bezüglich der Brandmeldeanlage diskutiert werden. Die Brandmeldeanlage ist über die Schnittstelle 128 in der Lage, über das Netzwerk 118 zu kommunizieren.

Ebenfalls in der Figur 1 gezeigt ist ein Einsatzleitrechner 116 der Feuerwehr, welcher für den Bereich zuständig ist, in welchem die feuergefährlichen Arbeiten durchgeführt werden sollen. Auch dieser Einsatzleitrechner verfügt analog wie die Brandmeldezentrale und der Scanner 100 über einen Prozessor 134, einen Speicher 138 mit Instruktionen 140, wobei die Ausführung der Instruktionen 140 durch den Prozessor 134 den Einsatzleitrechner zur Durchführung jener Verfahrensschritte steuert, welche im Rahmen der vorliegenden Beschreibung erörtert werden. Die Schnittstelle 136 des Einsatzleitrechners 116 dient dazu, eine Kommunikation über das Netzwerk 118 zu ermöglichen.

Um nun weiter eine mögliche Gefährdung der Person bei der Durchführung der feuergefährlichen Arbeiten zu verhindern, ohne das diesbezügliche Risiko zu minimieren, ist vorgesehen, dass nach dem Abfragen der zu deaktivierenden Sicherungseinrichtungen in Schritt 412 eine Abfrage am Display 102 dergestalt erfolgt, ob und welche Sicherungsmaßnahmen die Person gedenkt zur Sicherung der feuergefährlichen Arbeiten einzuleiten. Dies entspricht in Figur 4 dem Schritt 416. Eine entsprechende Oberfläche, welche am Display 102 angezeigt werden könnte, ist in der Figur 3b gezeigt. So könnte beispielsweise in systematischer Reihenfolge nacheinander abgefragt werden, ob die Person es für notwendig erachtet, einen Feuerlöscher an der Arbeitsstelle bereitzustellen, ob er die Sache für so kritisch erachtet, dass ein Notfallschutzplan und betriebliche Alarmpläne bereitliegen, dass ein Feuerwehrschlauch angeschlossen und ausgelegt werden muss usw. Der Benutzer oder die Person wird hier also systematisch durch einen Satz von abgefragten Sicherungsmaßnahmen geführt, sodass auch nichts vergessen wird, was zu seiner Sicherheit notwendig sein könnte.

Wie bereits oben erwähnt ist es möglich, dass die Stammdaten weitere Angaben bezüglich während des Zeitraums in dem Arbeitsbereich befindlicher Gefahrstoffe und/oder Maschinen aufweisen, welche bei der Durchführung der feuergefährlichen Arbeiten die Person gefährden könnten. Diese weiteren Informationen der Stammdaten können nun durch ein Bewertungsmodul im Schritt 414 dazu verwendet werden, aus einem Sicherungsmaßnahmenkatalog jene Sicherungsmaßnahmen am Display 102 anzuzeigen, welche für den aktuellen Gefahrenbereich und die durchzuführenden Arbeiten in besonderer Weise relevant sind. Dieses Bewertungsmodul kann entweder im Scanner 100 integriert sein oder aber in einem System integriert sein, welches sich außerhalb des Scanners befindet, beispielsweise der Datenbank 122.

Die vom Bewertungsmodul ausgewählten Sicherungsmaßnahmen sind dann jene, welche im Schritt 416 abgefragt werden, wobei hier der Benutzer zu jeder ausgewählten Sicherungsmaßnahme Stellung nehmen muss und angeben muss, ob er diese für erforderlich achtet oder nicht.

Im optionalen Schnitt 418 erfolgt anschließend eine Beurteilung, ob die vom Benutzer ausgewählten Sicherungsmaßnahmen ausreichend sind, um die Sicherheit des Benutzers bei der Durchführung der feuergefährlichen Arbeiten sicherzustellen. Ebenfalls das Bewertungsmodul kann diese Beurteilung im Schritt 418 durchführen.

Es sei angemerkt, dass Schritt 414 nur beispielhaft in der Figur 4 als durch das Bewertungsmodul durchgeführt gekennzeichnet ist. Dies kann auch durch ein anderes Modul durchgeführt werden, welches in der Datenbank 122 oder gar im Scanner 100 enthalten ist.

Sofern Schritt 418 ergibt, dass die vom Benutzer ausgewählten Sicherungsmaßnahmen nicht ausreichend sind, so führt das Verfahren zurück zu Schritt 416, mit welchem der Benutzer nochmals aufgefordert wird, sich mit den Sicherungsmaßnahmen zu beschäftigen und hier geeignete Sicherungsmaßnahmen auszuwählen. Ergibt Schritt 418 hingegen, dass die Sicherungsmaßnahmen ausreichend sind, so setzt sich das Verfahren im Schritt 420 wie obig beschrieben mit dem Senden des Deaktivierungsbefehls fort.

Der optionale Schritt 422, welcher nach dem Senden des Deaktivierungsbefehls oder aber nach dem Senden der Sicherungsdaten über das Netzwerk 118 von dem Scanner 100 übermittelt werden kann, dient dazu, technische Einrichtungen zu steuern, von welchen während der Durchführung der Arbeiten eine Gefahr einer durch die Arbeiten ausgelösten Brandentwicklung oder eine Personengefährdung ausgeht. Ziel ist es, dass automatisch über den Steuerbefehl diese technischen Einrichtungen so gesteuert werden, dass während des Zeitraums die Gefahr einer durch die Arbeiten ausgelösten Brandentwicklung oder die Personengefährdung selbst minimiert wird. Die entsprechenden hierzu notwendigen Informationen bezüglich dieser technischen Einrichtungen können beispielsweise wiederum in den Stammdaten enthalten sein.

Nachdem im Schritt 422 der Steuerbefehl übermittelt wurde, kann anschließend die technische Einrichtung den Erhalt und die ordnungsgemäße Verarbeitung des Steuerbefehls im Schritt 424 quittieren. Eine diesbezügliche Überprüfung kann durch den Scanner 100 stattfinden, wobei beispielsweise im Falle dessen, eine Quittierung nicht innerhalb eines vorbestimmten Zeitraums eingegangen ist, der Steuerbefehl erneut versendet wird. Erst dann, wenn tatsächlich eine ordnungsgemäße Quittierung durch die technische Einrichtung erfolgt ist, erfolgt im Schritt 428 die Freigabe der Durchführung der feuergefährlichen Arbeiten.

Die technische Einrichtung ist in der Figur 1 mit Bezugszeichen 150 gekennzeichnet.

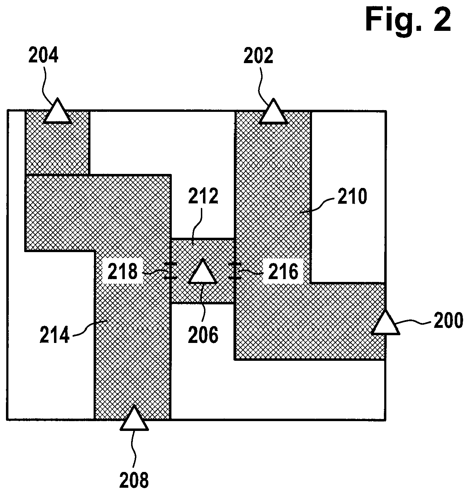

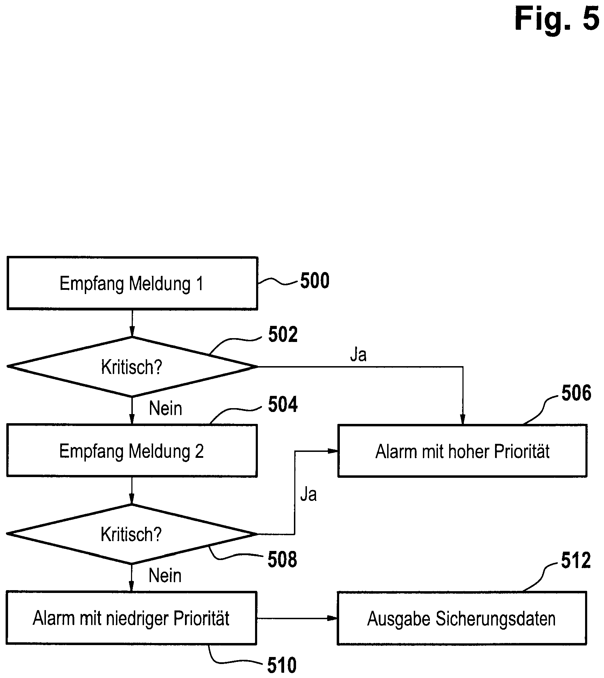

Die Figur 5 zeigt ein Flussdiagramm eines Verfahrens, welches durch die Brandmeldeanlage 124 durchgeführt werden kann. Ausgangspunkt ist dabei eine Anordnung von Brandmeldern und Räumlichkeiten, wie sie in der Figur 2 gezeigt sind. Die Figur 2 zeigt verschiedene Räume 210, 212 und 214, welche über Türen 216 bzw. 218 miteinander verbunden sind. Jedem Raum sind Brandmelder zugeordnet, wobei der Raum 210 zwei Brandmelder 200 und 202 aufweist, der Raum 212 einen Brandmelder 206 aufweist und der Raum 214 zwei Brandmelder 204 und 208 aufweist.

Gemäß dem Flussdiagramm der Figur 5 empfängt die Brandmeldeanlage im Schritt 500 eine erste Meldung von einem der Brandmelder 200 oder 202. Da jedoch im Folgenden davon ausgegangen wird, dass die beiden Brandmelder im Schritt 412 als zu deaktivierende Sicherungseinrichtungen markiert wurden, wird in Schritt 502 diese Meldung eines Brandereignisses von den Brandmeldern 200 und 202 durch die Brandmeldeanlage als nicht kritisch beurteilt (Schritt 502). Wären hingegen die beiden Brandmelder 200 und 202 nicht als zu deaktivierend markiert gewesen, so hätte dies unmittelbar zu einem Alarm mit hoher (= normaler) Priorität im Schritt 506 geführt.

Das Verfahren setzt sich fort im Schritt 504 mit dem Empfang einer zweiten Meldung, dieses Mal von Brandmelder 206. Da die Brandmelder 200, 202 und 206, welche Meldung 1 bzw. Meldung 2 ausgegeben haben, sich in unterschiedlichen Räumen befinden, welche jedoch miteinander so verbunden sind, dass etwaiger Rauch vom Arbeitsbereich 210 in den unmittelbar angrenzenden Bereich 212 überströmen kann, wird die Brandmeldeanlage im Schritt 508 die im Schritt 504 vom Brandmelder 206 empfangene Meldung einer Rauchentwicklung zunächst ebenfalls nicht als kritisch beurteilen, da die Brandmeldeanlage davon ausgeht, dass im Rahmen der zum Beispiel im Raum 210 durchgeführten Schweißarbeiten selbst entstandener Raum durch die Tür 216 in den Raum 212 hinübergezogen ist. Anders wäre dies, wenn im Schritt 500 zuvor keine Meldung 1 von einem der Rauchmelder 200 bzw. 202 empfangen worden wäre, sodass in diesem Fall Schritt 508 unmittelbar zur Auslösung eines Alarms mit hoher Priorität (Schritt 506) geführt hätte.

Da dies jedoch nicht der Fall ist, erfolgt im Schritt 510 die Auslösung eines Alarms mit niedriger Priorität, das heißt mit einer Priorität, die unterhalb der normalen Alarmpriorität liegt, welche gegeben ist, wenn ein Brandfall herrscht.

Im Falle dieses Feueralarms mit niedriger Priorität im Schritt 510 erfolgt zusätzlich auf dem Einsatzleitrechner 116 der für den Arbeitsbereich (Raum) 210 zuständigen Feuerwehr neben der Information bezüglich der beiden Meldungen auch eine Ausgabe der Sicherungsdaten im Schritt 512, welche zuvor im Schritt 426 an die Feuerwehrdatenbank 120 übermittelt wurden. Die vollständige Information bezüglich der Sicherungsdaten und der beiden Meldungen ermöglichen dann schließlich dem Einsatzleiter der Feuerwehr zu entscheiden, ob überhaupt irgendwelche Brandbekämpfungsmaßnahmen eingeleitet werden müssen oder welche Maßnahmen im vorliegenden Szenario für wichtig und richtig erachtet werden.

Der Fachmann wird verstehen, dass Aspekte der vorliegenden Erfindung als Gerät, Verfahren oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Der computerausführbare Code kann auf mehrere Prozessoren verteilt ausgeführt werden, zum Beispiel auf mehreren Prozessoren, die in einer Cloud-Umgebung verteilt sind. Der Code kann mehrere Module umfassen, wobei jedes Modul auf einem Prozessor ausgeführt werden kann.

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungs-vorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

### Bezugszeichenliste

- 100: Scanner
- 102: Display
- 104: Lesegerät
- 106: QR-Code
- 108: Prozessor
- 110: Schnittstelle
- 112: Speicher
- 114: Instruktionen
- 116: Einsatzleitrechner
- 118: Netzwerk
- 120: Feuerwehrdatenbank
- 122: Datenbank
- 124: Brandmeldeanlage
- 126: Prozessor
- 128: Schnittstelle
- 130: Speicher
- 132: Instruktionen
- 134: Prozessor
- 136: Schnittstelle
- 138: Speicher
- 140: Instruktionen
- 150: technische Einrichtung
- 200 - 208: Brandmelder
- 210 - 214: Raum
- 216 - 218: Türen

## Patentansprüche

1. Verfahren zur Sicherung von durch eine Person durchzuführenden feuergefährlichen Arbeiten in einem feuergefährdeten räumlichen Arbeitsbereich (210-214), wobei dem Arbeitsbereich (210-214) eine eindeutige Bereichskennung zugeordnet ist, wobei die Bereichskennung in dem Arbeitsbereich (210-214) elektronisch lesbar ist, wobei das Verfahren durch ein Sicherungsgerät (100) umfasst:
- Empfang einer eindeutigen Personenkennung der Person,
- Empfang einer Angabe einer Art der durchzuführenden feuergefährlichen Arbeiten,
- Elektronisches Lesen der Bereichskennung,
- Senden einer Anfrage über Stammdaten zu dem Arbeitsbereich (210-214) an eine Datenbank (122), wobei die Anfrage die Bereichskennung umfasst,
- Als Antwort auf das Senden der Anfrage, Empfang der Stammdaten von der Datenbank (122), wobei die Stammdaten eine eindeutige räumliche Position des Arbeitsbereichs (210-214) umfassen,
- Empfang eines Zeitraums der Durchführung der feuergefährlichen Arbeiten,
- Abfragen von für eine Dauer des Zeitraums zu deaktivierenden Sicherungseinrichtungen (200-208) des Arbeitsbereichs (210-214), wobei die Sicherungseinrichtungen (200-208) Brandmelder umfassen,
- Senden eines Deaktivierungsbefehls an eine Brandmeldeanlage (124), wobei der Deaktivierungsbefehl die Brandmeldeanlage (124) steuert, um für den Zeitraum von den zu deaktivierenden Sicherungseinrichtungen (200-208) gemeldete Ereignisse zur unmittelbaren Beurteilung einer Brandmeldung auszuschließen,
- Senden von Sicherungsdaten an eine Feuerwehrdatenbank (120) der für den Arbeitsbereich (210-214) zuständigen Feuerwehr, wobei die Sicherungsdaten die Art der durchzuführenden feuergefährlichen Arbeiten, den Zeitraum, die räumliche Position des Arbeitsbereichs (210-214) und die zu deaktivierenden Sicherungseinrichtungen (200-208) umfassen,
- Nach dem Senden der Sicherungsdaten, Freigabe der Durchführung der Arbeiten durch die Person für den Zeitraum.

2. Verfahren nach Anspruch 1, wobei die Stammdaten ferner weitere Angaben bezüglich während dem Zeitraum in dem Arbeitsbereich (210-214) befindliche Gefahrstoffe und/oder Maschinen aufweisen, welche bei der Durchführung der feuergefährlichen Arbeiten die Person gefährden könnten.

3. Verfahren nach einem der vorigen Ansprüche, ferner umfassend durch das Sicherungsgerät (100) ein nacheinander Abfragen von durch die Person vor Durchführung der Arbeiten auszuführenden verschiedenen Sicherungsmaßnahmen, wobei die Sicherungsmaßnahmen die Gefahr einer durch die Arbeiten ausgelösten Brandentwicklung oder Personengefährdung minimieren können.

4. Verfahren nach Anspruch 3, wobei die Freigabe nur dann erfolgt, wenn alle Sicherungsmaßnahmen vollständig abgefragt worden sind.

5. Verfahren nach Anspruch 3 oder 4, ferner umfassend eine Analyse
- der Art der durchzuführenden feuergefährlichen Arbeiten und/oder
- von während dem Zeitraum in dem Arbeitsbereich (210-214) befindliche Gefahrstoffe und/oder Maschinen,
wobei das Verfahren ferner ein automatisches Auswählen der abzufragenden Sicherungsmaßnahmen aus einem Sicherungsmaßnahmenkatalog basierend auf der Analyse umfasst.

6. Verfahren nach Anspruch 5, wobei die Analyse und/oder das automatische Auswählen durch ein Bewertungsmodul erfolgt, wobei das Verfahren ferner umfasst Senden
- der Art der durchzuführenden feuergefährlichen Arbeiten und/oder
- von während dem Zeitraum in dem Arbeitsbereich (210-214) befindliche Gefahrstoffe und/oder Maschinen,
durch das Sicherungsgerät (100) über eine Luftschnittstelle an das Bewertungsmodul zur Durchführung der Auswahl der abzufragenden Sicherungsmaßnahmen aus dem Sicherungsmaßnahmenkatalog basierend auf der Analyse, wobei als Antwort auf das Senden die abzufragenden Sicherungsmaßnahmen von dem Bewertungsmodul empfangen werden.

7. Verfahren nach einem der vorigen Ansprüche 3-6, ferner umfassend, durch das Bewertungsmodul oder das Sicherungsgerät (100):
- Von der Person, Empfang einer Eingabe einer Bestätigung eines Satzes der abgefragten Sicherungsmaßnahmen, wobei die Bestätigung angibt, dass der Satz von Sicherungsmaßnahmen ausgeführt werden soll,
- Prüfung, ob die bestätigten Sicherungsmaßnahmen bezüglich der weiteren Angaben bezüglich in dem Arbeitsbereich (210-214) befindlichen Gefahrstoffe und/oder Maschinen ausreichend sind, um die Gefahr einer durch die Arbeiten ausgelösten Brandentwicklung oder die Personengefährdung zu minimieren, wobei die Freigabe nur dann erfolgt, wenn die Prüfung ergibt, dass die bestätigten Sicherungsmaßnahmen ausreichend sind.

8. Verfahren nach einem der vorigen Ansprüche 2-7, ferner umfassend Senden eines Steuerbefehls an jene technische Einrichtungen (150), von welchen während der Durchführung der Arbeiten eine Gefahr einer durch die Arbeiten ausgelösten Brandentwicklung oder eine Personengefährdung ausgeht, wobei der Steuerbefehl die technischen Einrichtungen (150) so steuert, dass während des Zeitraums die Gefahr einer durch die Arbeiten ausgelösten Brandentwicklung oder die Personengefährdung minimiert wird, wobei die Minimierung auf Basis von in den Stammdaten enthaltenen Informationen bezüglich der technischen Einrichtungen (150) erfolgt.

9. Verfahren nach Anspruch 8, wobei die Freigabe nur erfolgt, wenn die technischen Einrichtungen (150) den Empfang und die ordnungsgemäße Verarbeitung des Steuerbefehls quittiert haben.

10. Verfahren nach einem der vorigen Ansprüche, ferner umfassend innerhalb des Zeitraums durch die Brandmeldeanlage (124) den Empfang eines ersten Ereignisses bezüglich eines möglichen Brandes von einem Brandmelder (200-208) aus einem an den Arbeitsbereich (210-214) angrenzenden Bereich, in welchen etwaiger Rauch von dem Arbeitsbereich (210-214) überströmen kann, wobei die Brandmeldeanlage (124) aufgrund des Ereignisses
- sofort einen Feueralarm mit niedriger Priorität im Vergleich zu einem normalen Feueralarm auslöst und/oder
- einen Feueralarm mit niedriger Priorität im Vergleich zu einem normalen Feueralarm auslöst, wenn von einem Brandmelder aus dem Arbeitsbereich (210-214) zeitlich zuvor innerhalb des Zeitraums ein zweites Ereignis bezüglich eines möglichen Brandes empfangen wurde und/oder
- einen Feueralarm mit der normalen Priorität auslöst, wenn von einem Brandmelder aus dem Arbeitsbereich (210-214) zeitlich zuvor innerhalb des Zeitraums kein zweites Ereignis bezüglich eines möglichen Brandes empfangen wurde.

11. Verfahren nach Anspruch 10, wobei im Falle des Feueralarms mit der niedrigen Priorität, bezüglich welchem von einem Brandmelder (200-208) aus dem Arbeitsbereich (210-214) zeitlich zuvor innerhalb des Zeitraums das zweite Ereignis bezüglich eines möglichen Brandes empfangen wurde, auf einem Einsatzleitrechner der für den Arbeitsbereich (210-214) zuständigen Feuerwehr neben der Information bezüglich des ersten Ereignisses auch eine Information bezüglich des zweiten Ereignisses mit dem Hinweis einer möglichen Korrelation zwischen diesen beiden Ereignissen und den Sicherungsdaten ausgegeben wird.

12. Computerprogrammprodukt mit von einem Prozessor oder mehreren Prozessoren ausführbaren Instruktionen zur Durchführung des Verfahrens nach einem der vorigen Ansprüche.

13. Sicherungsgerät (100) zur Sicherung von durch eine Person durchzuführenden feuergefährlichen Arbeiten in einem feuergefährdeten räumlichen Arbeitsbereich (210-214), wobei dem Arbeitsbereich (210-214) eine eindeutige Bereichskennung zugeordnet ist, wobei die Bereichskennung in dem Arbeitsbereich (210-214) elektronisch lesbar ist, wobei das Sicherungsgerät (100) einen Prozessor (108) und einen Speicher (112) aufweist, wobei der Speicher durch den Prozessor ausführbare Anweisungen (114) enthält, wobei die Ausführung der Anweisungen durch den Prozessor das Sicherungsgerät (100) anweisen zum:
- Empfang einer eindeutigen Personenkennung der Person,
- Empfang einer Angabe einer Art der durchzuführenden feuergefährlichen Arbeiten,
- Elektronisches Lesen der Bereichskennung,
- Senden einer Anfrage über Stammdaten zu dem Arbeitsbereich (210-214) an eine Datenbank (122), wobei die Anfrage die Bereichskennung umfasst,
- Als Antwort auf das Senden der Anfrage, Empfang der Stammdaten von der Datenbank (122), wobei die Stammdaten eine eindeutige räumliche Position des Arbeitsbereichs (210-214) umfassen,
- Empfang eines Zeitraums der Durchführung der feuergefährlichen Arbeiten,
- Abfragen der für die Dauer des Zeitraums zu deaktivierenden Sicherungseinrichtungen (200-208) des Arbeitsbereichs (210-214), wobei die Sicherungseinrichtungen (200-208) Brandmelder umfassen,
- Senden eines Deaktivierungsbefehls an eine Brandmeldeanlage (124), wobei der Deaktivierungsbefehl die Brandmeldeanlage (124) steuert, um für den Zeitraum von den zu deaktivierenden Sicherungseinrichtungen (200-208) gemeldete Ereignisse zur Beurteilung einer Brandmeldung auszuschließen,
- Senden von Sicherungsdaten an eine Feuerwehrdatenbank (120) der für den Arbeitsbereich (210-214) zuständigen Feuerwehr, wobei die Sicherungsdaten die Art der durchzuführenden feuergefährlichen Arbeiten, den Zeitraum, die räumliche Position des Arbeitsbereichs (210-214) und die zu deaktivierenden Sicherungseinrichtungen (200-208) umfasst,
- Nach dem Senden der Sicherungsdaten, Freigabe der Durchführung der Arbeiten durch die Person für den Zeitraum.

14. System, umfassend das Sicherungsgerät (100) nach Anspruch 13 und eine Brandmeldeanlage (124).
